# EUROPEAN PATENT APPLICATION

(11) **EP 4 209 928 A2**
(43) Date of publication of application: **12.07.2023**
(21) Application number: 23154624.3
(22) Date of filing: 02.02.2023
(51) Int. Cl.: G06F 16/538

(54) **METHOD, APPARATUS AND SYSTEM FOR PROCESSING MAKEUP, ELECTRONIC DEVICE AND STORAGE MEDIUM**

(30) Priority: 08.02.2022 CN 202210119223
(71) Applicant: BEIJING BAIDU NETCOM SCIENCE TECHNOLOGY CO., LTD., Beijing 100085 (CN)
(72) Inventor: SI, Hongjiang, Beijing, 100085 (CN)
(74) Representative: Maiwald GmbH

(57) **Abstract**

Provided are a method, an apparatus and a system for processing a makeup, an electronic device, and a storage medium. The specific implementation solution is: acquiring a search keyword; querying and displaying at least one candidate makeup image matching the search keyword; and acquiring a face image after makeup rendering in response to a selection operation of a target makeup image among each of the candidate makeup images, in which, the face image after makeup rendering is acquired by performing makeup rendering on a collected face image of a target object according to the target makeup image. Therefore, a makeup rendering is performed on a face image collected by a client according to the target makeup image selected by the client, so that the face image after makeup rendering satisfies a personalized requirement of a user, thereby improving a user experience.

## Description

### TECHNICAL FIELD

The present disclosure relates to the field of artificial intelligence (AI) technologies, specifically to technical fields such as intelligent search and virtual reality (VR)/augmented reality (AR), and particularly to a method, an apparatus and a system for processing a makeup, an electronic device and a storage medium.

### BACKGROUND

With rapid development of the Internet and computer technologies, more and more users know about and imitate makeup of celebrities such as stars and Internet celebrities through the Internet. Therefore, it is very important to achieve virtual makeup changing for the users to satisfy makeup changing requirements of the users.

### SUMMARY

A method, an apparatus and a system for processing a makeup, an electronic device and a storage medium are provided in the present disclosure, to solve at least one of problems in the related art.

According to one aspect of the present disclosure, a method for processing a makeup is provided, which is applied to a client and includes:
acquiring a search keyword;
querying and displaying at least one candidate makeup image matching the search keyword;
acquiring a face image after makeup rendering in response to a selection operation of a target makeup image among each of the candidate makeup images, in which the face image after makeup rendering is acquired by performing makeup rendering on a collected face image of a target object according to the target makeup image; and
displaying the face image after makeup rendering.

According to another aspect of the present disclosure, another method for processing a makeup is provided, which is applied to a server and includes:
acquiring a search keyword from a client;
querying at least one candidate makeup image matching the search keyword, and sending each of the candidate makeup images to the client;
acquiring an identifier of a target makeup image in said each of the candidate makeup images and a face image of a target object from the client;
determining the target makeup image according to the identifier, and performing a makeup rendering on the face image according to the target makeup image; and
returning a face image after makeup rendering to the client, in which a makeup of the face image after makeup rendering matches a makeup of the target makeup image.

According to still another aspect of the present disclosure, an apparatus for processing a makeup is provided, which is applied to a client. The apparatus includes:
a first acquiring module, configured to acquire a search keyword;
a processing module, configured to query and display at least one candidate makeup image matching the search keyword;
a second acquiring module, configured to acquire a face image after makeup rendering in response to a selection operation of a target makeup image among each of the candidate makeup images, in which the face image after makeup rendering is acquired by performing makeup rendering on a collected face image of a target object according to the target makeup image; and
a first displaying module, configured to display the face image after makeup rendering.

According to yet another aspect of the present disclosure, another apparatus for processing a makeup is provided, which is applied to a server. The apparatus includes:
a first acquiring module, configured to acquire a search keyword from a client;
a processing module, configured to query at least one candidate makeup image matching the search keyword, and send each of the candidate makeup images to the client;
a second acquiring module, configured to acquire an identifier of a target makeup image in said each of the candidate makeup images and a face image of a target object from the client;
a determining module, configured to determine the target makeup image according to the identifier;
a rendering module, configured to perform a makeup rendering on the face image according to the target makeup image; and
a returning module, configured to return a face image after makeup rendering to the client, in which a makeup of the face image after makeup rendering matches a makeup of the target makeup image.

According to yet another aspect of the present disclosure, a system for processing a makeup is provided. The system includes:
a client, configured to perform the method for processing a makeup provided in the above one aspect of the present disclosure; and
a server, configured to perform the method for processing a makeup provided in the above another aspect of the present disclosure.

According to yet another aspect of the present disclosure, an electronic device is provided. The electronic device includes:
at least one processor; and
a memory communicatively connected to said at least one processor, in which,
the memory is stored with instructions executable by said at least one processor, and when the instructions are performed by said at least one processor, to cause said at least one processor to perform the method for processing a makeup as described in the above one aspect of the present disclosure or perform the method for processing a makeup as described in the above another aspect of the present disclosure.

According to yet another aspect of the present disclosure, a non-transitory computer-readable storage medium stored with computer instructions is provided. The computer instructions are configured to cause a computer to perform the method for processing a makeup as described in the above one aspect of the present disclosure or the method for processing a makeup as described in the above another aspect of the present disclosure.

According to yet another aspect of the present disclosure, a computer program product is provided, which includes a computer program. The computer program is configured to implement the method for processing a makeup as described in the above one aspect of the present disclosure or implement the method for processing a makeup as described in the above another aspect of the present disclosure when performed by a processor.

It should be understood that, the content described in the part is not intended to identify key or important features of embodiments of the present disclosure, nor intended to limit the scope of the present disclosure. Other features of the present disclosure will be easy to understand through the following specification.

### BRIEF DESCRIPTION OF THE DRAWINGS

The drawings are intended to better understand the solution, and do not constitute a limitation to the disclosure.
FIG. 1 is a flowchart illustrating a method for processing a makeup provided in embodiment 1 of the present disclosure;
FIG. 2 is a flowchart illustrating a method for processing a makeup provided in embodiment 2 of the present disclosure;
FIG. 3 is a flowchart illustrating a method for processing a makeup provided in embodiment 3 of the present disclosure;
FIG. 4 is a diagram showing a search display page in the embodiment of the present disclosure;
FIG. 5 is a flowchart illustrating a method for processing a makeup provided in embodiment 4 of the present disclosure;
FIG. 6 is a diagram showing a function page in the embodiment of the present disclosure;
FIG. 7 is a diagram showing a makeup object list in the embodiment of the present disclosure;
FIG. 8 is a flowchart illustrating a method for processing a makeup provided in embodiment 5 of the present disclosure;
FIG. 9 is a flowchart illustrating a method for processing a makeup provided in embodiment 6 of the present disclosure;
FIG. 10 is a flowchart illustrating a method for processing a makeup provided in embodiment 7 of the present disclosure;
FIG. 11 is a flowchart illustrating a method for processing a makeup provided in embodiment 8 of the present disclosure;
FIG. 12 is a flowchart illustrating a method for processing a makeup provided in embodiment 9 of the present disclosure;
FIG. 13 is a flowchart illustrating a method for processing a makeup provided in embodiment 10 of the present disclosure;
FIG. 14 is a flowchart illustrating a method for processing a makeup provided in embodiment 11 of the present disclosure;
FIG. 15 is a flowchart illustrating a method for processing a makeup provided in embodiment 12 of the present disclosure;
FIG. 16 is a flowchart illustrating a method for processing a makeup provided in embodiment 13 of the present disclosure;
FIG. 17 is a block diagram illustrating a structure of an apparatus for processing a makeup provided in embodiment 14 of the present disclosure;
FIG. 18 is a block diagram illustrating a structure of an apparatus for makeup processing provided in embodiment 15 of the present disclosure;
FIG. 19 is a block diagram illustrating an electronic device configured to implement the embodiment of the present disclosure.

### DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein without departing from the scope of the present disclosure. Similarly, for clarity and conciseness, descriptions of well-known functions and structures are omitted in the following descriptions.

With continuous improvement of people's living standards, requirements of people on makeup beauty are stronger and stronger, and especially people pursue beauty makeup of celebrities such as stars and internet celebrities, want to know about what makeup celebrities wear, and to imitate them. At present, there is a huge demand for matching celebrity makeup online in various search engines, for example, a user may search "what makeup Gu XX wears", or a user may have a requirement for acquiring a matched makeup scheme based on his/her facial features.

When the user searches for a "star makeup" at a client with a search function, a search engine returns an article and/or a video containing makeup information to a client. The article and the video are edited and produced by an author or a blogger. However, the star makeup is strongly related to a star herself/himself, and the makeup information is difficult to express in language or text, with a low makeup information density and a poor information structure. Moreover, as a makeup form and an area applied by a star are diverse, for example, the makeup of a star contains makeup information such as lipstick, eyebrow pencil, eye shadow and blusher, the user needs to search a matching effect of the makeup of a star that is suitable for himself/herself from the article and the video, presenting a low search efficiency and a poor user experience.

For the above problems, a method and an apparatus for processing a makeup, an electronic device and a storage medium are provided in the present disclosure.

The method, apparatus and system for processing a makeup, the electronic device and the storage medium in embodiments of the present disclosure are described with reference to the Figures.

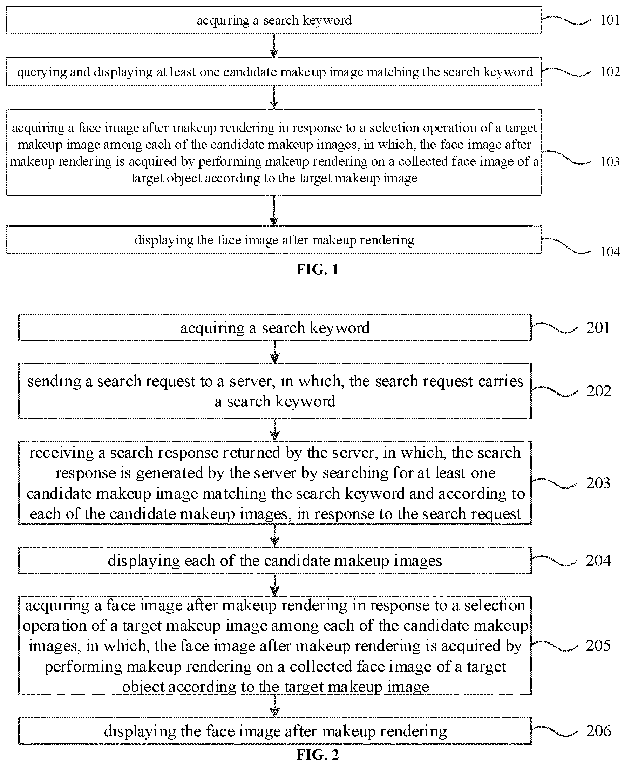

FIG. 1 is a flowchart illustrating a method for processing a makeup provided in embodiment 1 of the present disclosure.

The method for processing a makeup is provided in embodiments of the present disclosure, which is applicable to a client. The client refers to a software program that runs on an electronic device and provides a service for a user, such as an application having a search function.

The electronic device may be any device with a computing capacity, such as a personal computer (PC), a mobile terminal and the like. The mobile terminal may be, for example, a mobile phone, a tablet computer, a personal digital assistant, a wearable device and other hardware devices with various operating systems, touch screens, and/or display screens.

As illustrated in FIG. 1, the method for processing a makeup may include the following steps.

At step 101, a search keyword is acquired.

In embodiments of the present disclosure, the search keyword may include a target makeup required by a user or text information related to the target makeup, and the search keyword may be input by the user on a client side based on the makeup requirement.

As an example, the search keyword may be a celebrity makeup, for example, the search keyword may be "star makeup", "Internet celebrity makeup" and the like.

As another example, the search keyword may be a celebrity name (for example, a name of a star or a name of an Internet celebrity), for example, the search keyword may be "Yang XX", "Fan XX", etc.

As yet another example, the search keyword may be a makeup of a specific celebrity, for example, the search keyword may be "a makeup of Yang XX", "a makeup of Fan XX", etc., which is not limited in embodiments of the present disclosure.

In embodiments of the present disclosure, the user may input the search keyword at a client side, and an input mode of the search keyword include but not limited to a touch input (such as swipe, click, etc.), a keyboard input, a voice input, etc.

At step 102, at least one candidate makeup image matching the search keyword is queried and displayed.

In embodiments of the present disclosure, the candidate makeup image refers to an image including makeup information, and a number of the candidate makeup images may be at least one, for example, in order to enhance a utilization rate of the user and satisfy a personalized makeup changing requirement of the user, a number of the candidate makeup images may be more than one, which is not limited in the present disclosure.

In a possible implementation of embodiments of the present disclosure, the candidate makeup image may be a makeup image stored at the client side. The client may query and search at least one candidate makeup image matching the search keyword from data stored locally. For example, the client may query and search at least one candidate makeup image matching the search keyword by using an image retrieval technology based on text.

As an example, the client may match attribute information (such as a file name) of each makeup images stored locally with the search keyword, and take the makeup image of which the attribute information matches the search keyword as a candidate makeup image.

As another example, a makeup image may be labeled in advance based on features of the makeup image (such as a name of a person and a makeup type of a person in the makeup image), for example, the makeup image may be labeled based on the name of the person (such as Yang XX) and the makeup type (such as pure, sexy, retro Hong Kong style) in the makeup image, so that the client may match label information of each makeup images stored locally with the search keyword, and take the makeup image of which the label information matches the search keyword as a candidate makeup image.

For example, when the search keyword is "a makeup of Yang XX", the makeup image of "Yang XX" included in the label information may be taken as a candidate makeup image.

In another possible implementation of embodiments of the present disclosure, the candidate makeup image may be a makeup image stored at a server, and the client may acquire each of the candidate makeup images stored at the server by querying the server. For example, the client may send the search keyword to the server and the server may query the candidate makeup image matching the search keyword when acquiring the search keyword. For example, the server may search at least one candidate makeup image matching the search keyword by using the image retrieval technology based on text. The server may return each of the candidate makeup images to the client when searching each of the candidate makeup images, and correspondingly, the client may receive the candidate makeup image sent by the server.

In embodiments of the present disclosure, the client may display at least one candidate makeup image when querying at least one candidate makeup image matching the search keyword.

At step 103, a face image after makeup rendering is acquired in response to a selection operation of a target makeup image among each of the candidate makeup images, where the face image after makeup rendering is acquired by performing makeup rendering on a collected face image of a target object according to the target makeup image.

In embodiments of the present disclosure, the target object may be an object using a client, and the object may be a person, an animal, etc. For example, the target object may be a user that logs in the client. A face image of the target object may be collected by a camera of an electronic device called by the client. A number or a position of the camera is not limited in the present disclosure. The camera may be a front camera, or a rear camera, or an external camera.

In embodiments of the present disclosure, when the client displays each of the candidate makeup images, the target object may select a required target makeup image from each of the candidate makeup images to perform makeup rendering on its own face image according to the target makeup image.

Specifically, the client may acquire the face image after makeup rendering in response to the selection operation of the target makeup image among each of candidate makeup images. The face image after makeup rendering is acquired by performing the makeup rendering on the collected face image of the target object based on the target makeup image.

As an example, the client may perform the makeup rendering on the collected face image of the target object based on the target makeup image in response to the selection operation of the target makeup image in each of the candidate makeup images, so as to acquire the face image after makeup rendering.

As another example, in order to reduce a processing burden of the client, the server may perform the makeup rendering on the face image of the target object. For example, the server may acquire the face image of the target object and an identifier of the target makeup image from the client, and determine the target makeup image based on the identifier of the target makeup image, and perform the makeup rendering on the acquired face image based on the target makeup image, thereby returning the face image after makeup rendering to the client, so as to obtain the face image after makeup rendering.

As a possible implementation, the server or the client may determine a makeup parameter in the target makeup image when performing the makeup rendering on the face image based on the target makeup image. The makeup parameter may include a makeup type (such as eye makeup, base makeup, lip makeup, face repair) and a makeup color (an RGB value), and the makeup rendering is performed on the face image according to the makeup parameter. For example, when the makeup parameter is "lip makeup", and the makeup color is "RGB = XX", a lip area in the face image may be recognized, and the RGB value of each pixel in the lip area may be set to "XX", so that the lip makeup in the face image after makeup rendering matches the target makeup image.

At step 104, the face image after makeup rendering is displayed.

In embodiments of the present disclosure, the client may display the face image after makeup rendering when acquiring the face image after makeup rendering.

In the method for processing a makeup in embodiments of the present disclosure, the search keyword is acquired by the client; at least one candidate makeup image matching the search keyword is queried and displayed; and the face image after makeup rendering is acquired in response to the selection operation of the target makeup image in each of the candidate makeup images, in which the face image after makeup rendering is acquired by performing the makeup rendering on the collected face image of the target object according to the target makeup image. Therefore, the client displays each of the candidate makeup images matching the search keyword, and the user may initiatively select his/her preferred target makeup image from each of the candidate makeup images, so that the makeup rendering may be performed on the face image collected by the client based on the target makeup image. That is, in the disclosure, it is realized that the makeup rendering may be performed on the face image collected by the client according to the target makeup image selected by the client, so that the face image after makeup rendering satisfies the personalized requirement of the user, and thus improving the user experience.

It needs to be noted that, in the technical solution of the present disclosure, processes such as a collection, storage, use, processing, transmission, provision and disclosure of personal information of the user involved in the present disclosure are performed with the consent of the user, and conform to provisions of relevant legal regulations, and do not violate the public-order yield.

As a possible implementation, in order to reduce the processing burden of the client, the server may query at least one candidate makeup image matching the search keyword. The above process is described in combination with FIG. 2.

FIG. 2 is a flowchart illustrating a method for processing a makeup provided in embodiment 2 of the present disclosure.

As illustrated in FIG. 2, the method for processing a makeup includes the following steps.

At step 201, a search keyword is acquired.

The execution process of the step 201 may refer to an execution process of any embodiment of the present disclosure, which will not be repeated here.

At step 202, a search request is sent to a server, where the search request carries the search keyword.

In embodiments of the present disclosure, the client may send the search request to the server when receiving the search keyword input by the user, where the search request carries the search keyword. Correspondingly, the server may receive the search request, and search at least one candidate makeup image matching the search keyword based on the search keyword in the search request in response to the search request, and returns a search response to the client, where the search response includes each of the candidate makeup images.

At step 203, the search response returned by the server is received, where the search response is generated by the server by searching at least one candidate makeup image matching the search keyword, and according to each of the candidate makeup images, in response to the search request.

In embodiments of the present disclosure, the server may return the search response to the client after obtaining at least one candidate makeup image matching the search keyword by searching. Correspondingly, the client may receive the search response returned by the server.

At step 204, each of the candidate makeup images is displayed.

In embodiments of the present disclosure, the client may display each of the candidate makeup images in the search response when receiving the search response.

At step 205, a face image after makeup rendering is acquired in response to a selection operation of a target makeup image among each of the candidate makeup images, where the face image after makeup rendering is acquired by performing makeup rendering on a collected face image of a target object according to the target makeup image.

At step 206, the face image after makeup rendering is displayed.

The execution process of the step 205 to the step 206 may refer to an execution process of any embodiment of the present disclosure, which will not be repeated here.

In the method for processing a makeup in embodiments of the present disclosure, the client sends the search request to the server, where the search request carries the search keyword; receives the search response returned by the server, where the search response is generated by the server by searching at least one candidate makeup image matching the search keyword and according to each of the candidate makeup images, in response to the search request; and displays each of the candidate makeup images. Thus, the server queries at least one candidate makeup image matching the search keyword, which reduces the processing burden of the client and avoids a mode of searching for a makeup image or organizing makeup information manually with a cumbersome and complex operation and omission, thereby improving comprehensiveness and accuracy of a coverage for the makeup image.

In order to clarify how the client displays each of the candidate makeup images in the above embodiments, a method for processing a makeup is further provided in the present disclosure.

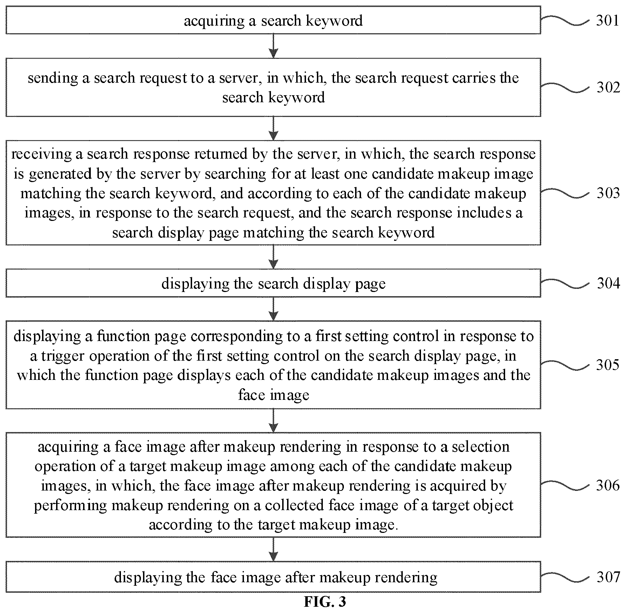

FIG. 3 is a flowchart illustrating a method for processing a makeup provided in embodiment 3 of the present disclosure.

As illustrated in FIG. 3, the method for processing a makeup includes the following steps.

At step 301, a search keyword is acquired.

At step 302, a search request is sent to a server, in which the search request carries the search keyword.

At step 303, a search response returned by the server is received, where the search response is generated by the server by searching at least one candidate makeup image matching the search keyword, and according to each of the candidate makeup images, in response to the search request, and the search response includes a search display page matching the search keyword.

The execution process of the step 301 to the step 303 may refer to an execution process of any embodiment of the present disclosure, which will not be repeated here.

At step 304, the search display page is displayed.

In embodiments of the present disclosure, the client may display the search display page when receiving the search request returned by the server, where the search request includes search information associated with the search keyword.

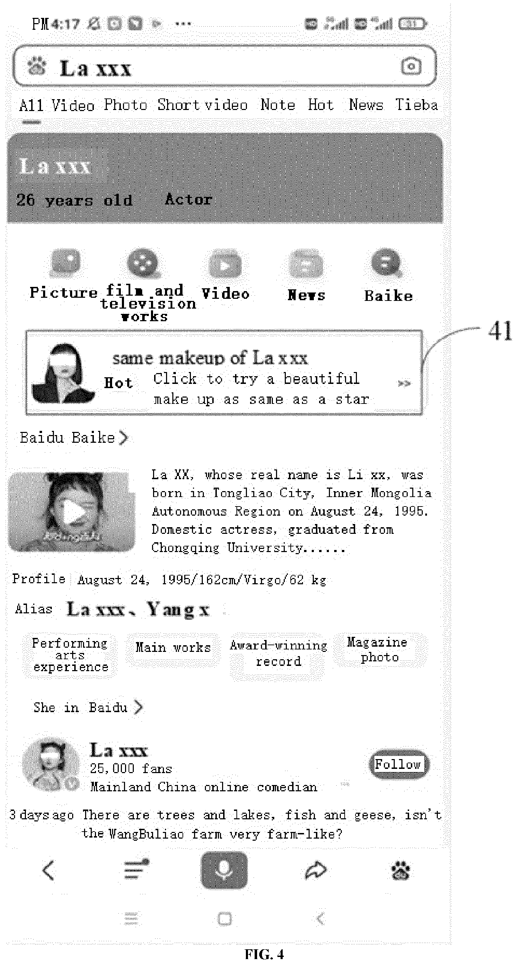

As an example, taking the search keyword being a name of a specific star for an example, assuming that the search keyword is "La xxx", the search display page may be as shown in FIG. 4. In FIG. 4, the search display page may include a personal profile of "La xxx", status information published by "LA xxx", etc.

At step 305, a function page corresponding to a first setting control is displayed in response to a trigger operation of the first setting control on the search display page, where the function page displays each of the candidate makeup images and a face image.

In embodiments of the present disclosure, the search display page may further include the first setting control. When a target object triggers the first setting control on the search display page, the client may display a function page corresponding to the first setting control, where the function page displays each of candidate makeup images and the face image. The first setting control is associated with the function page, and the target object may determine whether to display the function page based on the requirements.

That is, when the target object does not have a makeup changing requirement, the first setting control may not be triggered, and the client only displays the search display page matching the search keyword. For example, when the target object enters a name of a celebrity, the target object may only have a requirement of querying relevant information of the celebrity, and does not have a makeup changing requirement; while the target object with the makeup changing requirement may trigger the first setting control to enter the function page associated with the first setting control.

As a possible implementation, in order to enable a user to know about makeup information in each of the candidate makeup images, in the present disclosure, the function page may further display makeup information of each of the candidate makeup images, where the makeup information may include makeup categories of the candidate makeup images, such as a teenage girl makeup and an elderly makeup.

At step 306, a face image after makeup rendering is acquired in response to a selection operation of a target makeup image among each of the candidate makeup images where the face image after makeup rendering is acquired by performing makeup rendering on a collected face image of a target object according to the target makeup image.

At step 307, the face image after makeup rendering is displayed.

The execution process of the step 306 to the step 307 may refer to an execution process of any embodiment of the present disclosure, which will not be repeated here.

In the method for processing a makeup in embodiments of the present disclosure, the client displays the search display page matching the search keyword when receiving the search response returned by the server; and displays the function page corresponding to the first setting control in response to the trigger operation of the first setting control on the search display page, where the function page displays each of the candidate makeup images and the face image. Therefore, when the user triggers the first setting control, each of the candidate makeup images is displayed to the user, while when the user does not trigger the first setting control, only a search display page matching the search keyword may be displayed to the user, thus accurately and effectively displaying a page matching the requirements to the user by determining actual search requirements of the user, thereby improving a search experience of the user.

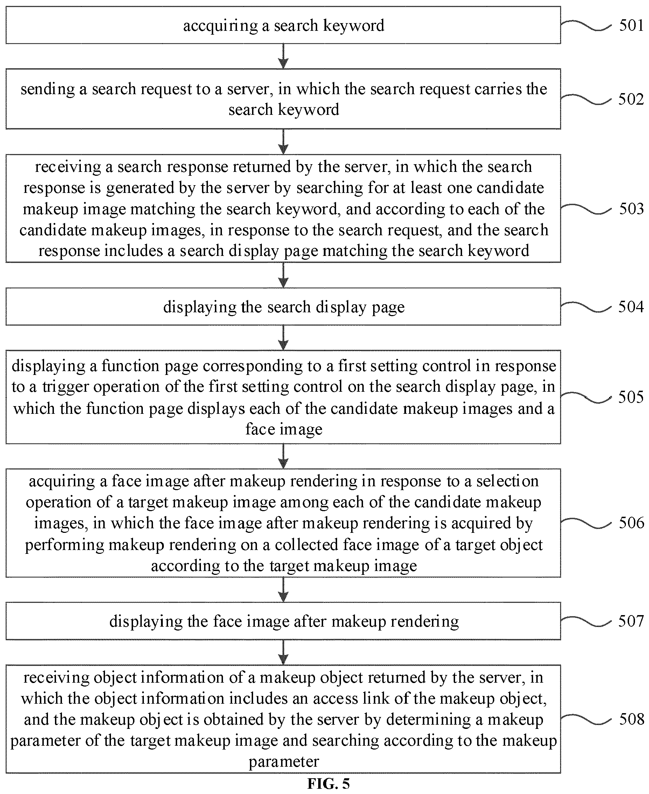

In a possible implementation of embodiments of the present disclosure, in order to improve flexibility and applicability of the method, object information of a makeup object matching a makeup parameter in the makeup image may be further displayed on the function page, to help the user know about the makeup object matching the makeup image, thereby further improving the user experience. The above process is described in combination with FIG. 5.

FIG. 5 is a flowchart illustrating a method for processing a makeup provided in embodiment 4 of the present disclosure.

As illustrated in FIG. 5, the method for processing a makeup includes the following steps.

At step 501, a search keyword is acquired.

At step 502, a search request is sent to a server, where the search request carries the search keyword.

At step 503, a search response returned by the server is received, where the search response is generated by the server by searching at least one candidate makeup image matching the search keyword, and according to each of the candidate makeup images, in response to the search request, and the search response includes a search display page matching the search keyword.

At step 504, the search display page is displayed.

At step 505, a function page corresponding to a first setting control is displayed in response to a trigger operation of the first setting control on the search display page, where the function page displays each of the candidate makeup images and a face image.

At step 506, a face image after makeup rendering is acquired in response to a selection operation of a target makeup image among each of the candidate makeup images, where the face image after makeup rendering is acquired by performing a makeup rendering on a collected face image of a target object according to the target makeup image.

At step 507, the face image after makeup rendering is displayed.

In embodiments of the present disclosure, the face image after makeup render may be displayed on the function page, that is, the face image after makeup rendering may be displayed in an area for displaying the face image of the target object in the function page.

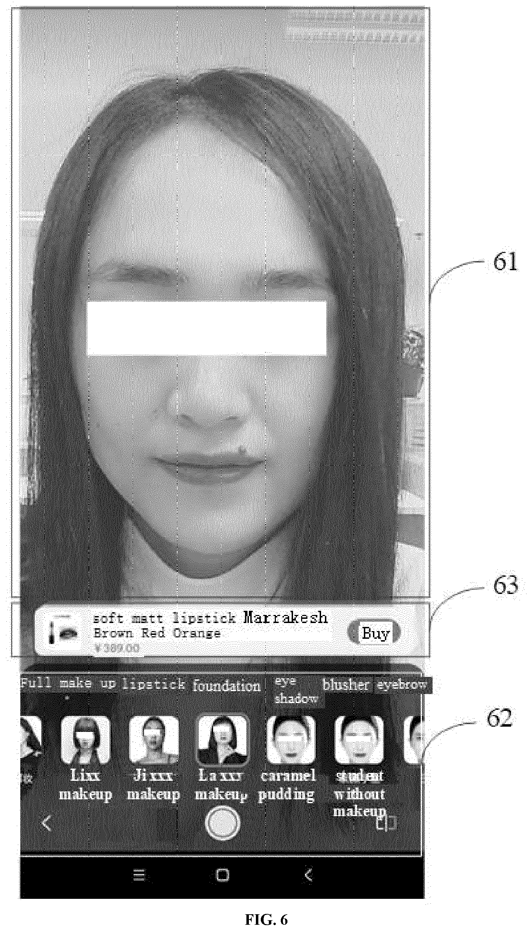

As an example, taking the search keyword being a name of a specific star as an example, assuming that the search keyword is "La xxx", a corresponding search display page may be as shown in FIG. 4 after "La xxx" is input in a search box of the client, where the search display page includes personal information of "La xxx", and a first setting control (for example, "a same makeup of La xxxx" as shown in an area 41 of FIG. 4). When the user triggers the first setting control, a corresponding function page may be obtained as shown in FIG. 6. An area 61 in the function page shown in FIG. 6 is for displaying a face image of the user, and an area 62 is for displaying each of the candidate makeup images, in which the candidate makeup images may include a makeup image of La xxx and makeup images of other stars (such as hot stars). When the user clicks a candidate makeup image in the area 62 (i.e., a target makeup image), the face image after makeup rendering may be displayed in the area 61.

The execution process of the step 501 to the step 507 may refer to an execution process of any embodiment of the present disclosure, which will not be repeated here.

At step 508, object information of a makeup object returned by the server is received, where the object information includes an access link of the makeup object, and the makeup object is obtained by the server by determining a makeup parameter of the target makeup image and searching according to the makeup parameter.

It needs to be noted that, the present disclosure only takes the step 508 being executed after the step 507 as an example, but is not limited to it, that is, the present disclosure does not limit an execution timing of the step 508. The step 508 may be executed in conjunction with the step 506, or executed after the step 506, which is not limited in the disclosure.

In embodiments of the present disclosure, the makeup object may be, for example, a makeup commodity. The access link of the makeup object may be a link for accessing the makeup object, and taking the makeup object being a makeup commodity as an example, the access link may be a purchase link of the makeup commodity.

In embodiments of the present disclosure, the makeup parameter may include a makeup type and a makeup color. The makeup type may include eye makeup, base makeup, lip makeup, face repair, etc.; and the makeup color may be a specific RGB value. For example, when the makeup type is lip makeup, the RGB value in the makeup color may refer to carrot color, cherry red, etc.

In embodiments of the present disclosure, the server may determine the makeup parameter in the target makeup image in response to a selection operation of the target makeup image among each of the candidate makeup images; search a makeup object matching the makeup parameter; and return object information of each of the makeup objects to the client. The object information includes at least an access link of the makeup object, for example, the object information may further include information such as a name or a color number of the makeup object. Correspondingly, the client may receive the object information of the makeup object returned by the server.

It needs to be noted that, in actual applications, the user may have a requirement of knowing about the object information of the makeup object matching the makeup parameter in the target makeup image. Therefore, in a possible implementation of embodiments of the present disclosure, when receiving the object information of each of the makeup objects, the client may further display the object information of the makeup object matching the makeup parameter in the makeup image on a function page, to help the user know about the makeup object matching the makeup image.

Specifically, the function page may further display a second setting control for displaying the object information. When the target object triggers the second setting control on the function page, the client may display a makeup object list in response to the trigger of the second setting control on the function page. The makeup object list includes object information of at least one of the makeup object.

In embodiments of the present disclosure, the target object may determine whether to trigger the second setting control on the function page according to requirements, and when the target object does not trigger the second setting control, each of the candidate makeup images and a face image after makeup rendering may be displayed on the function page, and when the target object triggers the second setting control, the client may display a makeup object list in response to the trigger. The makeup object list includes object information of at least one makeup object. That is, a number of the object information of the makeup object may be one or more, for example, in order to enhance comprehensiveness of a coverage to the object information of the makeup object and satisfy a user requirement, a number of the object information of the makeup object may be more than one, which is not limited in the present disclosure.

In embodiments of the present disclosure, the makeup object list may be presented in a static mode or flown in a dynamic mode, or may be suspended on the face image of the target object, which is not limited in the present disclosure.

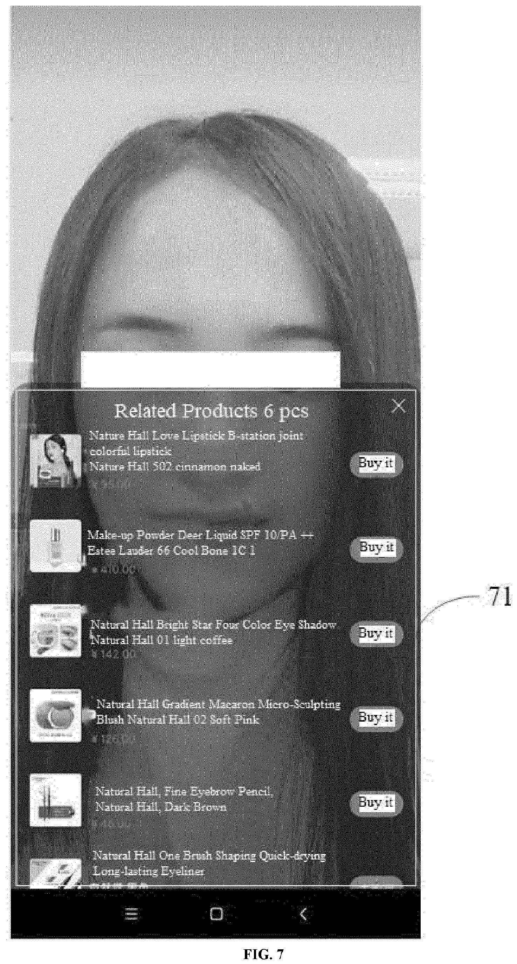

As an example, an area 63 in FIG. 6 is for displaying the second setting control, and when the user clicks the second setting control, a makeup object list as shown in an area 71 in FIG. 7 may be displayed, in which the makeup object list includes access links of more than one makeup objects. Taking the makeup object being a makeup commodity and the access link being a purchase link as an example, when the user clicks the access link of one of the makeup objects in the makeup object list, the user may skip to a purchase page corresponding to the makeup object, so that the user may know and purchase the same makeup commodity in the makeup image.

In the method for processing a makeup processing in embodiments of the present disclosure, the client receives object information of the makeup object returned by the server, so that the client may access the makeup object according to the object information, thus satisfying a requirement of the user for knowing about the makeup object in the makeup image, thereby improving a user experience, and further enhancing flexibility and applicability of the method. That is, the server returns the object information of the makeup object to the client, so that the user may directly access a corresponding makeup object at the client side conveniently based on the access link in the object information, to acquire more object information of the makeup object matching the target makeup image, thus satisfying the requirement of the user for knowing about the makeup object in the makeup image, thereby improving the user experience, and further enhancing the flexibility and the applicability of the method.

In order to clarify how the client acquires a face image after makeup rendering in any embodiment of the present disclosure, a method for processing a makeup is further provided in the present disclosure.

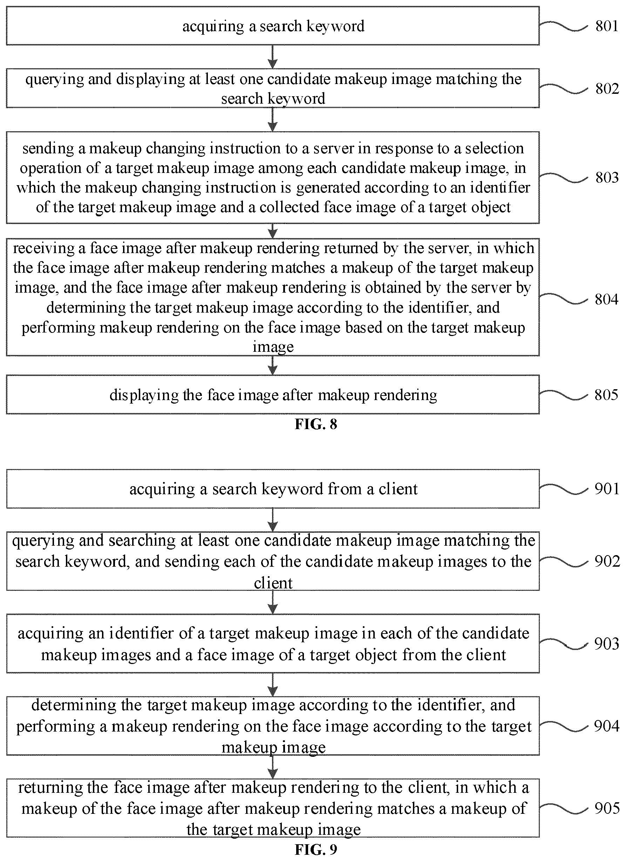

FIG. 8 is a flowchart illustrating a method for processing a makeup provided in embodiment 5 of the present disclosure.

At step 801, a search keyword is acquired.

At step 802, at least one candidate makeup image matching the search keyword is queried and displayed.

The execution process of the step 801 to the step 802 may refer to an execution process of the above any embodiment of the present disclosure, which will not be repeated here.

At step 803, a makeup changing instruction is sent to a server in response to a selection operation of a target makeup image among each of the candidate makeup images, where the makeup changing instruction is generated according to an identifier of the target makeup image and a collected face image of a target object.

In embodiments of the present disclosure, when the selection operation of the target makeup image among each of the candidate makeup images is monitored by the client, the makeup changing instruction may be generated according to the identifier of the target makeup image and the collected face image of the target object, and be sent to the server.

In a possible implementation of embodiments of the present disclosure, the server may label each of the candidate makeup images based on features of each of the makeup images (such as a name of a person and a makeup type of a person in the makeup image). For example, the server may label the candidate makeup image based on the name of the person (such as Yang XX) and the makeup type (such as pure, sexy, retro Hong Kong style) in the candidate makeup image. The server may return each of labeled candidate makeup images to a client, and when the client receives each of the candidate makeup images, each of the candidate makeup images and a corresponding label may be displayed simultaneously according to the label of each of the candidate makeup images, so that the target object may select a target makeup image based on the label.

As an example, as shown in the area 62 of FIG. 6, the function page not only displays each of the candidate makeup images but also displays a star name in each of the candidate makeup images, and the user may select a candidate makeup image corresponding to his/her preferred star as the target makeup image.

At step 804, a face image after makeup rendering returned by the server is received, where the face image after makeup rendering matches a makeup of the target makeup image, and the face image after makeup rendering is obtained by the server by determining the target makeup image according to the identifier and performing makeup rendering on the face image based on the target makeup image.

In embodiments of the present disclosure, the server may determine the target makeup image according to the identifier of the target makeup image when receiving a makeup changing instruction sent by the client, and perform the makeup rendering on the collected face image of the target object based on the target makeup image to obtain the face image after makeup rendering, thereby returning the face image after makeup rendering to the client.

At step 805, the face image after makeup rendering is displayed.

The execution process of the step 805 may refer to an execution process of any embodiment of the present disclosure, which will not be repeated here.

In the method for processing a makeup in embodiments of the present disclosure, the makeup rendering may be performed on the face image collected by the client based on the target makeup image selected by the user, so that the face image after makeup rendering satisfies the personalized makeup changing requirement of the user, thereby improving the user experience. In addition, the makeup rendering on the face image performed by the server reduces the processing burden of the client.

The above is each method embodiments executed by the client. A method embodiment executed by the server is further provided in the present disclosure.

FIG. 9 is a flowchart illustrating a method for processing a makeup provided in embodiment 6 of the present disclosure.

As illustrated in FIG. 9, the method for processing a makeup includes the following steps.

At step 901, a search keyword is acquired from a client.

In embodiments of the present disclosure, the client may send the search keyword to the server when receiving the search keyword input by the user. Correspondingly, the server may receive the search keyword sent by the client.

At step 902, at least one candidate makeup image matching the search keyword is queried, and each of the candidate makeup images is sent to the client.

In embodiments of the present disclosure, the candidate makeup image may be a makeup image stored on the server. The server may query a candidate makeup image matching the search keyword when receiving the search keyword. For example, the server may query the candidate makeup image matching the search keyword by using an image retrieval technology based on text, and return a query result to the client. A number of candidate makeup images may be at least one, or, in order to enhance the comprehensiveness of coverage for the makeup image and to further enhance the utilization rate of the user and satisfy the personalized makeup changing requirement of the user, a number of the candidate makeup images may be more than one, which is not limited in the present disclosure.

At step 903, an identifier of a target makeup image in each of the candidate makeup images and a face image of a target object are acquired from the client.

In embodiments of the present disclosure, the target object may be an object using a client, and the object may be a person, an animal, etc. For example, the target object may be a user that logs in the client. A face image of the target object may be collected by a camera of an electronic device called by the client. A number or a position of the camera is not limited in the present disclosure. The camera may be a front camera, or a rear camera, or an external camera.

In embodiments of the present disclosure, the client may display each of the candidate makeup images when receiving each of the candidate makeup images. The target object may select a required target makeup image from each of the candidate makeup images; and correspondingly, the client may send an identifier of the target makeup image and a collected face image of the target object to the server when monitoring a selection operation of the target makeup image among each of the candidate makeup images, and correspondingly, the server may receive the identifier and the face image.

At step 904, the target makeup image is determined according to the identifier, and the makeup rendering is performed on the face image according to the target makeup image.

In embodiments of the present disclosure, the server may determine a target makeup image based on the identifier of the target makeup image, and perform the makeup rendering on the face image of the target object based on the target makeup image.

At step 905, the face image after makeup rendering is returned to the client, where a makeup of the face image after makeup rendering matches a makeup of the target makeup image.

In embodiments of the present disclosure, the server may return the face image after makeup rendering to the client when acquiring the face image after makeup rendering, so that the client may display the face image after makeup rendering.

In the method for processing a makeup in embodiments of the present disclosure, the server acquires the search keyword from the client; queries at least one candidate makeup image matching the search keyword and sends each of the candidate makeup images to the client; acquires the identifier of the target makeup image and the face image of the target object to the client; determines the target makeup image based on the identifier and performs the makeup rendering on the face image based on the target makeup image; and returns the face image after makeup rendering to the client, where the makeup of the face image after makeup rendering matches the makeup of the target makeup image, and thus performing the makeup rendering on the face image collected by the client based on the target makeup image selected by the client, to make the face image after makeup rendering satisfy the personalized requirement of the user, thereby improving the user experience.

In order to clarify how to perform the makeup rendering on the face image in the above embodiment of the present disclosure, a method for processing a makeup is further provided in the present disclosure.

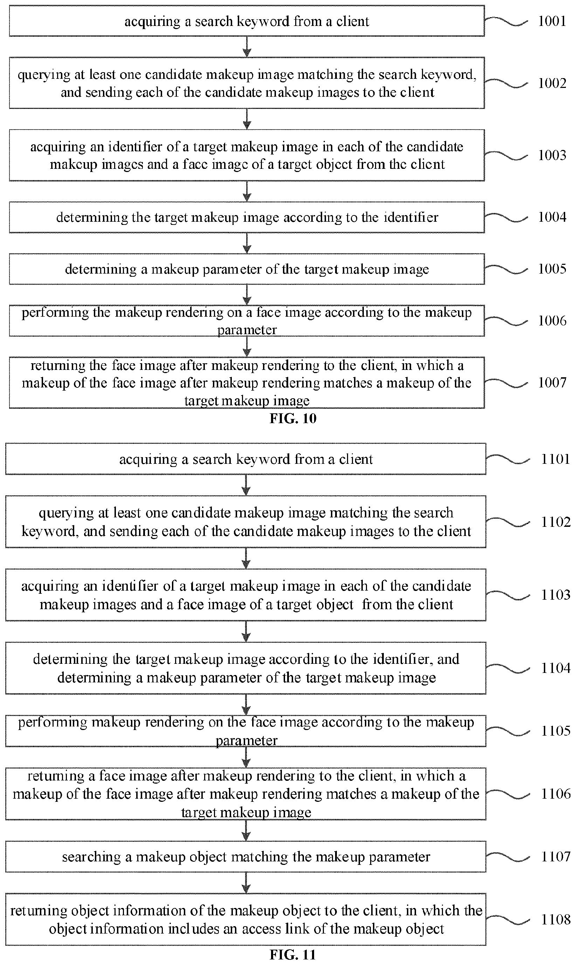

FIG. 10 is a flowchart illustrating a method for processing a makeup provided in embodiment 7 of the present disclosure.

As illustrated in FIG. 10, the method for processing a makeup includes the following steps.

At step 1001, a search keyword is acquired from a client.

At step 1002, at least one candidate makeup image matching the search keyword is queried, and each of the candidate makeup images is sent to the client.

At step 1003, an identifier of a target makeup image in each of the candidate makeup images and a face image of a target object are acquired from the client.

At step 1004, the target makeup image is determined according to the identifier.

The execution process of the step 1001 to the step 1004 may refer to an execution process of the above any embodiment of the present disclosure, which will not be repeated here.

At step 1005, a makeup parameter in the target makeup image is determined.

In embodiments of the present disclosure, the makeup parameter may include a makeup type and a makeup color. The makeup type may include eye makeup, base makeup, lip makeup, face repair, etc.; and the makeup color may be an RGB value. For example, when the makeup type is lip makeup, the RGB value in the makeup color may refer to carrot color, cherry red, etc., which is not limited in the present disclosure.

In embodiments of the present disclosure, the server may determine the makeup parameter in the target makeup image based on an image recognition technology.

At step 1006, makeup rendering is performed on the face image according to the makeup parameter.

In embodiments of the present disclosure, when acquiring the makeup parameter in the target makeup image, the server may perform the makeup rendering on the face image of the target object according to the makeup parameter. For example, when the makeup parameter is "lip makeup", and the makeup color is "RGB = XX", the server may recognize a lip area in the face image, and the RGB value of each pixel in the lip area may be set to "XX", so that the lip makeup in the face image after makeup rendering matches the target makeup image.

At step 1007, the face image after makeup rendering is returned to the client, where a makeup of the face image after makeup rendering matches a makeup of the target makeup image.

The execution process of the step 1007 may refer to an execution process of the above any embodiment of the present disclosure, which will not be repeated here.

In the method for processing a makeup in embodiments of the present disclosure, the server acquires the identifier of the target makeup image in each of the candidate makeup images and the face image of the target object from the client; determines the target makeup image according to the identifier and determines the makeup parameter in the target makeup image; and performs the makeup rendering on the face image according to the makeup parameter. Therefore, the server performs the makeup rendering on the face image according to the makeup parameter in the target makeup image, so that the makeup in the rendered face image matches the makeup in the target makeup image, thus satisfying actual makeup changing requirements of the user, thereby improving the user experience.

It should be noted that, in actual applications, the user may have a requirement of knowing about the makeup object matching the target makeup image. Therefore, in a possible implementation of embodiments of the present disclosure, the server may further return object information of the makeup object matching the makeup parameter to the client, so as to provide the user with a path of knowing about the object information of the makeup object. The above process is described in combination with FIG. 11.

FIG. 11 is a flowchart illustrating a method for processing a makeup provided in embodiment 8 of the present disclosure.

At step 1101, a search keyword is acquired from a client.

At step 1102, at least one candidate makeup image matching the search keyword is queried, and each of the candidate makeup images is sent to the client.

At step 1103, an identifier of a target makeup image in each of the candidate makeup images and a face image of a target object are acquired from the client.

At step 1104, the target makeup image is determined according to the identifier, and a makeup parameter in the target makeup image is determined.

At step 1105, makeup rendering is performed on the face image according to the makeup parameter.

At step 1106, a face image after makeup rendering is returned to the client, where a makeup of the face image after makeup rendering matches a makeup of the target makeup image.

The execution process of the step 1101 to the step 1106 may refer to an execution process of the above any embodiment of the present disclosure, which will not be repeated here.

At step 1107, a makeup object matching the makeup parameter is searched.

It should be noted that, the present disclosure only takes the step 1107 being executed after the step 1106 as an example, but is not limited to it. In actual applications, the step 1107 only needs to be executed after the step 1104.

In embodiments of the present disclosure, the makeup object, for example, may be a makeup commodity. An access link of the makeup object may be a link for accessing the makeup object, and taking the makeup object being a makeup commodity as an example, the access link may be a purchase link of the makeup commodity.

In embodiments of the present disclosure, the server may search the makeup object matching the makeup parameter according to the makeup parameter. For example, when the makeup type in the makeup parameter is lip makeup, and the makeup color is "RGB = XX", assuming that the color indicated by "RGB = XX" is carrot color, the makeup object may be a lipstick, a lip mud and a lip glaze of carrot color.

At step 1108, object information of the makeup object is returned to the client, where the object information includes the access link of the makeup object.

In embodiments of the present disclosure, when the server searches and obtains of each of the makeup objects, the object information of the makeup object is returned to the client. The object information may at least include the access link of the makeup object, and for example, may further include information such as a name or a color number of the makeup object.

In the method for processing a makeup in embodiments of the present disclosure, the server searches for the makeup object matching the makeup parameter; and returns the object information of the makeup object to the client, where the object information includes the access link of the makeup object. Therefore, by returning the object information of the makeup object to the client, the user may directly access a corresponding makeup object at the client side conveniently based on the access link in the object information by returning the object information of the makeup object to the client, to acquire more object information of the makeup object matching the target makeup image, thus satisfying the requirement of the user for knowing about the makeup object in the makeup image, thereby improving the user experience, and further enhancing the flexibility and the applicability of the method.

In order to clarify how the server acquires the identifier of the target makeup image and the face image of the target object in the above embodiment, a method for processing a makeup is further provided in the present disclosure.

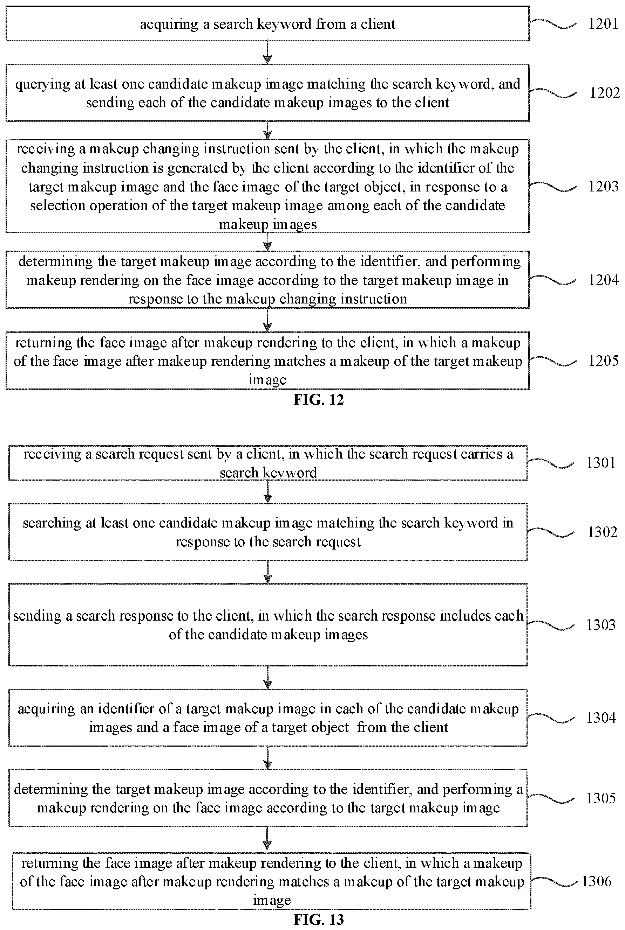

FIG. 12 is a flowchart illustrating a method for processing a makeup provided in embodiment 9 of the present disclosure.

As illustrated in FIG. 12, the method for processing a makeup includes the following steps.

At step 1201, a search keyword is acquired from a client.

At step 1202, at least one candidate makeup image matching the search keyword is queried, and each of the candidate makeup images is sent to the client.

The execution process of the step 1201 to the step 1202 may refer to an execution process of the above any embodiment of the present disclosure, which will not be repeated here.

At step 1203, a makeup changing instruction sent by the client is received, where the makeup changing instruction is generated by the client according to an identifier of the target makeup image and the face image of the target object, in response to a selection operation of the target makeup image among each of the candidate makeup images.

In embodiments of the present disclosure, when the selection operation of the target makeup image among each of the candidate makeup images is monitored by the client, the makeup changing instruction may be generated according to the identifier of the target makeup image and the collected face image of the target object, and be sent to the server. Correspondingly, the server may receive the makeup changing instruction sent by the client.

At step 1204, the target makeup image is determined based on the identifier, and makeup rendering is performed on the face image according to the target makeup image in response to the makeup changing instruction.

At step 1205, the face image after makeup rendering is returned to the client, where a makeup of the face image after makeup rendering matches a makeup of the target makeup image.

The execution process of the steps 1204 to 1205 may refer to an execution process of the above any embodiment of the present disclosure, which will not be repeated here.

In the method for processing a makeup in embodiments of the present disclosure, the server performs the makeup rendering on the face image collected by the client based on the target makeup image selected by the user, so that the face image after makeup rendering satisfies the personalized makeup changing requirement of the user, thereby improving the user experience.

In order to clarify how the server acquires the search keyword from the client and how the server sends each of the candidate makeup images to the client in any one embodiment of the present disclosure, a method for processing a makeup is further provided in the present disclosure.

FIG. 13 is a flowchart illustrating a method for processing a makeup provided in embodiment 10 of the present disclosure.

As illustrated in FIG. 13, the method for processing a makeup includes the following steps.

At step 1301, a search request sent by a client is received, where the search request carries a search keyword.

In embodiments of the present disclosure, a client side may send the search request to a server when receiving the search keyword input by the user. The search request carries the search keyword. Correspondingly, the server may receive the search keyword.

At step 1302, at least one candidate makeup image matching the search keyword is searched in response to the search request.

In embodiments of the present disclosure, the server may search at least one candidate makeup image matching the search keyword according to the search keyword in the search request in response to the search request when receiving the search request. For example, the server may search at least one candidate makeup image matching the search keyword by using an image retrieval technology based on text.

At step 1303, a search response is sent to the client, where the search response includes each of the candidate makeup images.

In embodiments of the present disclosure, the server may send the search response to the client when searching and obtaining each of the candidate makeup images, where the search response includes each of the candidate makeup images.

At step 1304, an identifier of a target makeup image in each of the candidate makeup images and a face image of a target object are acquired from the client.

At step 1305, the target makeup image is determined according to the identifier, and makeup rendering is performed on the face image according to the target makeup image.

At step 1306, the face image after makeup rendering is returned to the client, where a makeup of the face image after makeup rendering matches a makeup of the target makeup image.

The execution process of the step 1304 to the step 1306 may refer to an execution process of the above any embodiment of the present disclosure, which will not be repeated here.

In the method for processing a makeup in embodiments of the present disclosure, the server receives the search request sent by the client, where the search request carries the search keyword; searches at least one candidate makeup image matching the search keyword in response to the search request; and send the search response to the client, where the search response includes each of the candidate makeup images. Therefore, the search keyword is effectively sent to the server by sending the search request, and each of the candidate makeup images is effectively sent to the client side by sending the search response.

In order to clarify how the server searches for at least one candidate makeup image matching the search keyword in the above embodiment, a method for processing a makeup is further provided in the present disclosure.

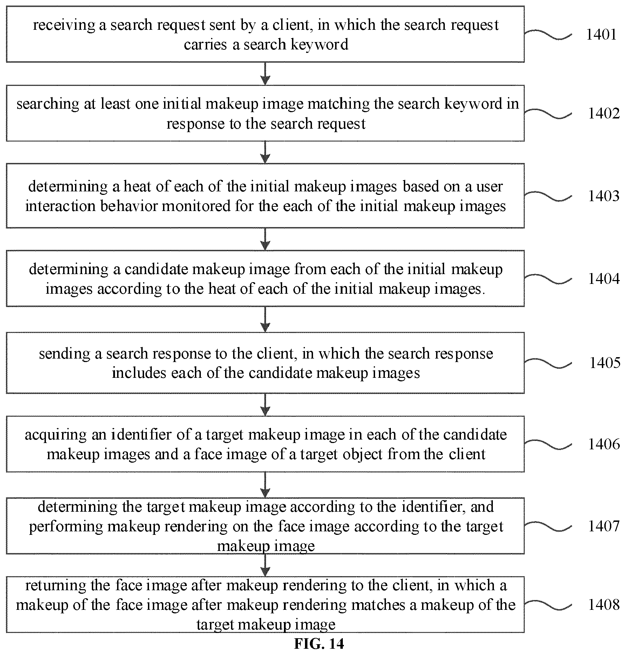

FIG. 14 is a flowchart illustrating a method for processing a makeup provided in embodiment 11 of the present disclosure.

As illustrated in FIG. 14, the method for processing a makeup includes the following steps.

At step 1401, a search request sent by a client is received, where the search request carries a search keyword.

The execution process of the step 1401 may refer to an execution process of the above any embodiment of the present disclosure, which will not be repeated here.

At step 1402, at least one initial makeup image matching the search keyword is searched in response to the search request.

In embodiments of the present disclosure, the server may search at least one initial makeup image matching the search keyword in response to the search request when receiving the search request.

For example, when the search keyword is "star makeup", makeup images of more than one star may be searched and taken as the initial makeup images.

At step 1403, a heat of each of the initial makeup images is determined according to a user interaction behavior monitored for each of the initial makeup images.

In embodiments of the present disclosure, the user interaction behavior indicates use and a reproduction of each client for the initial makeup image. The server may monitor the user interaction behavior of each client for the initial makeup image, for example, the server may count a number of times of use, a use frequency, a reproduction frequency, etc. of each client for each of the initial makeup images; and determine an activity level of each of the initial makeup images based on the user interaction behavior of each of the initial makeup images; and further determine the heat of each of the initial makeup images. The heat is positively correlated with the activity level.

At step 1404, a candidate makeup image is determined from each of the initial makeup images according to the heat of each of the initial makeup images.

In embodiments of the present disclosure, the server may select the candidate makeup image from each of the initial makeup images according to the heat of each of the initial makeup images. For example, the initial makeup images may be sorted from high to low based on the heat, and a set number of initial makeup images that rank top may be selected as candidate makeup images.

At step 1405, a search response is sent to the client, where the search response includes each of the candidate makeup images.

At step 1406, an identifier of a target makeup image in each of the candidate makeup images and a face image of a target object are acquired from the client.

At step 1407, the target makeup image is determined according to the identifier, and makeup rendering is performed on the face image according to the target makeup image.

At step 1408, the face image after makeup rendering is returned to the client, where a makeup of the face image after makeup rendering matches a makeup of the target makeup image.

The execution process of the step 1405 to the step 1408 may refer to an execution process of the above any embodiment of the present disclosure, which will not be repeated here.

In the method for processing a makeup in embodiments of the present disclosure, the server determines the heat of each of the initial makeup images based on the user interaction behavior monitored for each of the initial makeup images; and determines a candidate makeup image from each of the initial makeup images based on the heat of each of the initial makeup images. Thus, the server returning a popular makeup image to the client recommends a hot or popular makeup for the user, thus satisfying the user demand, thereby improving the user experience.

In order to clarify how the server searches for at least one candidate makeup image matching the search keyword in the above embodiment, a method for processing a makeup is further provided in the present disclosure.

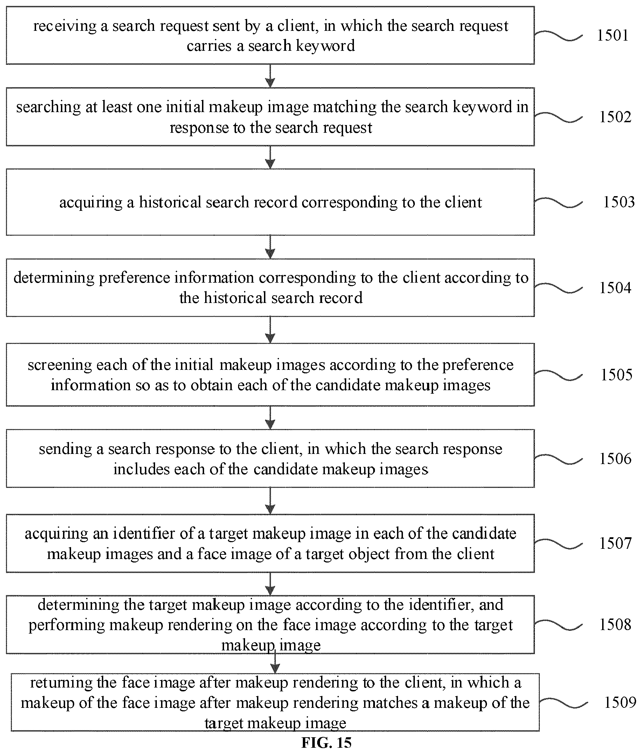

FIG. 15 is a flowchart illustrating a method for processing a makeup provided in embodiment 12 of the present disclosure.

As illustrated in FIG. 15, the method for processing a makeup includes the following steps.

At step 1501, a search request sent by a client is received, where the search request carries a search keyword.

At step 1502, at least one initial makeup image matching the search keyword is searched in response to the search request.

The execution process of the step 1501 to the step 1502 may refer to an execution process of the above any embodiment of the present disclosure, which will not be repeated here.

At step 1503, a historical search record corresponding to the client is acquired.

In embodiments of the present disclosure, the server may correspondingly store a search record of each client and an identifier of each client. Accordingly, in the present disclosure, the server may query stored data according to the identifier of the client when receiving a search request sent by a specific client, to determine the search record corresponding to the identifier as the historical search record corresponding to the client.

At step 1504, preference information corresponding to the client is determined based on the historical search record.

In embodiments of the present disclosure, the preference information is used to indicate a preference of a user that logs in the client.

In embodiments of the present disclosure, the server may determine the preference information corresponding to the client based on the historical search record when acquiring the historical search record of the client.

For example, in case of that the target object is a fan of a star "Yang X", and often inputs "Yang X" in the client, it may be determined that the preference of the target object is "Yang X" based on the historical search record of the client.

At step 1505, each of the initial makeup images is screened according to the preference information so as to obtain each of the initial makeup images.

In embodiments of the present disclosure, the server may screen each of the initial makeup images based on the preference information when determining the preference information corresponding to the client, to retain each of the candidate makeup images matching the preference information.

Still taking the above example as an example, a makeup image of "Yang X" may be retained as the candidate makeup image.

At step 1506, a search response is sent to the client, where the search response includes each of the candidate makeup images.

At step 1507, an identifier of a target makeup image in each of the candidate makeup images and a face image of a target object are acquired from the client.

At step 1508, the target makeup image is determined according to the identifier, and makeup rendering is performed on the face image according to the target makeup image.

At step 1509, the face image after makeup rendering is returned to the client, where a makeup of the face image after makeup rendering matches a makeup of the target makeup image.

The execution process of the step 1506 to the step 1509 may refer to an execution process of the above any embodiment of the present disclosure, which will not be repeated here.

In embodiments of the present disclosure, the server acquires the historical search record corresponding to the client; determines preference information corresponding to the client based on the historical search record; and screens each of the makeup images based on the preference information so as to obtain each of the candidate makeup images. Therefore, the server returns the makeup image matching the preference information of the client to the client, so that a preferred makeup may be recommended to the user, thus satisfying the personalized makeup changing requirement of the user, thereby improving the user experience.

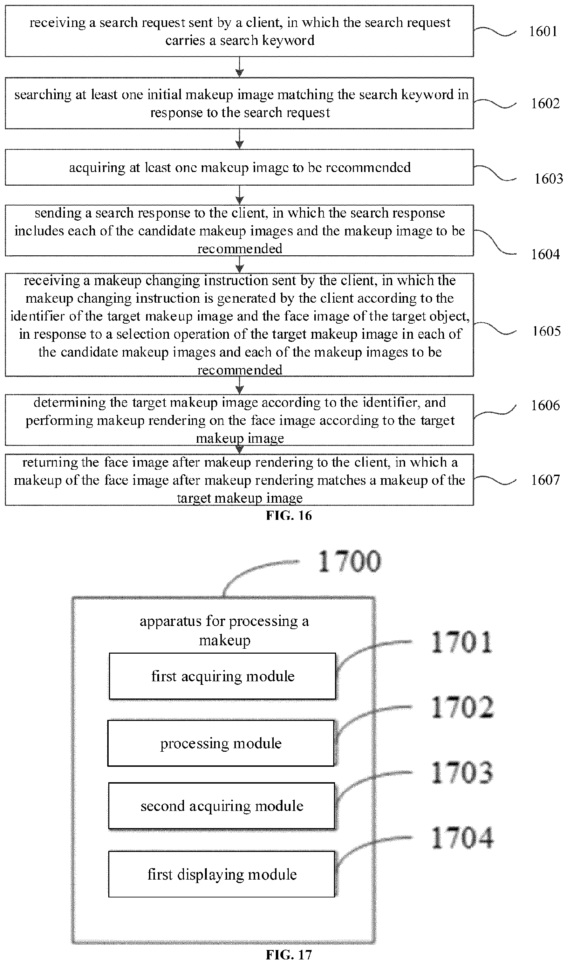

In a possible implementation of embodiments of the present disclosure, in order to provide more makeup changing selections for the user, except for displaying the candidate makeup image matching the search keyword to the user, other makeup images may be further displayed, such as a popular makeup image, or a makeup image matching a facial feature of the user, etc. The above process is described in combination with FIG. 16.

FIG. 16 is a flowchart illustrating a method for processing a makeup provided in embodiment 13 of the present disclosure.

As illustrated in FIG. 16, the method for processing a makeup includes the following steps.

At step 1601, a search request sent by a client is received, where the search request carries a search keyword.

At step 1602, at least one candidate makeup image matching the search keyword is searched in response to the search request.

The execution process of the step 1601 to the step 1602 may refer to an execution process of the above any embodiment of the present disclosure, which will not be repeated here.

At step 1603, at least one makeup image to be recommended is acquired.

In embodiments of the present disclosure, the method for acquiring the makeup image to be recommended may be randomly acquired by the server, or may be acquired based on the heat of each of the makeup images, or may be set by a backstage person, or may further be acquired based on facial features of the face image of the target object, which is not limited in the present disclosure.

The server may acquire the face image of the target object from a client side, perform a feature extraction on the face image based on a feature extraction technology, match the extracted face feature with the image feature of each makeup image, and take the matched makeup image as the makeup image to be recommended.

At step 1604, a search response is sent to the client, where the search response includes each of the candidate makeup images and the makeup image to be recommended.

In embodiments of the present disclosure, the server may send each of the candidate makeup images and each of the makeup images to be recommended to the client.

At step 1605, a makeup changing instruction sent by the client is received, where the makeup changing instruction is generated by the client according to the identifier of the target makeup image and the face image of the target object, in response to a selection operation of the target makeup image among each of the candidate makeup images and each of the makeup images to be recommended.

In embodiments of the present disclosure, when the client monitors the selection operation of the target makeup image in each of the candidate makeup images and each of the makeup images to be recommended, the makeup changing instruction may be generated according to the identifier of the target makeup image and the collected face image of the target object, and be sent to the server. Correspondingly, the server may receive the makeup changing instruction sent by the client.

As an example, as illustrated in FIG. 5 and FIG. 6, when the user searches for "La xxx", the server not only returns to the client a makeup image of "La xxx", but also returns makeup images of other popular stars such as a makeup image of "Ji xx", and makeup images of different makeup types such as caramel pudding and student without makeup.

At step 1606, the target makeup image is determined according to the identifier, and makeup rendering is performed on the face image according to the target makeup image.

At step 1607, the face image after makeup rendering is returned to the client, where a makeup of the face image after makeup rendering matches a makeup of the target makeup image.

The execution process of the step 1605 to the step 1607 may refer to an execution process of the above any embodiment of the present disclosure, which will not be repeated here.

In embodiments of the present disclosure, at least one makeup image to be recommended is acquired; the search response is sent to the client, where the search response further includes a makeup image to be recommended; and the makeup changing instruction is generated by the client according to the identifier of the target makeup image and the face image, in response to the selection operation of each of candidate makeup images and the target makeup image in each of the makeup images to be recommended. Therefore, displays to the user not only includes the candidate makeup image matching the search keyword, but also includes each of the makeup images to be recommended, so that the user has more makeup changing selections, thereby improving the flexibility of the method for processing a makeup.

Corresponding to the method for processing a makeup provided in embodiments of FIG. 1 to FIG. 8, an apparatus for processing a makeup is further provided in the present disclosure. Since the apparatus for processing a makeup provided in embodiments of the present disclosure corresponds to the method for processing a makeup provided in embodiments of FIG. 1 to FIG. 8, the implementation of the method for processing a makeup may be applied to an apparatus for processing a makeup provided in embodiments of the present disclosure, which will not be detailed described here.

FIG. 17 is a diagram illustrating a structure of an apparatus for processing a makeup provided in embodiment 14 of the present disclosure.

As illustrated in FIG. 17, the apparatus 1700 for processing a makeup is applied to a client. The apparatus 1700 for processing a makeup may include a first acquiring module 1701, a processing module 1702, a second acquiring module 1703 and a first displaying module 1704.

The first acquiring module 1701 is configured to acquire a search keyword.

The processing module 1702 is configured to query and display at least one candidate makeup image matching the search keyword.

The second acquiring module 1703 is configured to acquire a face image after makeup rendering in response to a selection operation of a target makeup image among each of the candidate makeup images. The face image after makeup rendering is acquired by performing makeup rendering on a collected face image of a target object according to the target makeup image.

The first displaying module 1704 is configured to display the face image after makeup rendering.

In a possible implementation in embodiments of the present disclosure, the apparatus 1700 for processing a makeup may further include a sending module, a receiving module and a second displaying module.

The sending module is configured to send a search request to a server, where the search request carries the search keyword.

The receiving module is configured to receive a search response returned by the server, where the search response is generated by the server by searching at least one candidate makeup image matching the search keyword, and according to each of the candidate makeup images, in response to the search request.

The second display module is configured to display the face image after makeup rendering.

In a possible implementation of embodiments of the present disclosure, the search response further includes a search display page matching the search keyword. The second displaying module is specifically configured to display a search display page; and display a function page corresponding to a first setting control in response to a trigger operation of the first setting control on the search display page, where the function page displays each of the candidate makeup images and a face image.

In a possible implementation of embodiments of the present disclosure, the receiving module is further configured to receive object information of a makeup object returned by the server. The object information includes an access link of the makeup object, and the makeup object is obtained by the server by determining a makeup parameter of the target makeup image and searching according to the makeup parameter.

In a possible implementation of embodiments of the present disclosure, the function page further displays a second setting control for displaying object information. The second displaying module is further configured to display a makeup object list in response to a trigger operation of the second setting control on the function page, where the makeup object list includes object information of at least one of the makeup object.

In a possible implementation of embodiments of the present disclosure, the second acquiring module 1703 is specifically configured to: send a makeup changing instruction to the server in response to the selection operation of the target makeup image among each of the candidate makeup images, in which, the makeup changing instruction is generated according to an identifier of the target makeup image and the face image; and receive a face image after makeup rendering returned by the server, in which, the face image after makeup rendering matches a makeup of the target makeup image, and the face image after makeup rendering is obtained by the server by determining the target makeup image according to the identifier, and performing makeup rendering on the face image based on the target makeup image.

In the apparatus for processing a makeup in embodiments of the present disclosure, a search keyword is acquired; at least one candidate makeup image matching the search keyword is queried and displayed; a face image after makeup rendering is acquired in response to a selection operation of a target makeup image in each of the candidate makeup images. The face image after makeup rendering is acquired by performing a makeup rendering on a collected face image of a target object based on the target makeup image face image. Therefore, the makeup rendering may be performed on the face image collected by the client according to the target makeup image selected by the client, so that the face image after makeup rendering satisfies the personalized requirement of the user, thereby improving the user experience.

Corresponding to the method for processing a makeup provided in embodiments of FIG. 9 to FIG. 16, an apparatus for processing a makeup is further provided in the present disclosure. Since the apparatus for processing a makeup provided in embodiments of the present disclosure corresponds to the method for processing a makeup provided in embodiments of FIG. 9 to FIG. 16, the implementation of the method for processing a makeup may be applied to an apparatus for processing a makeup provided in embodiments of the present disclosure, which will not be described here.

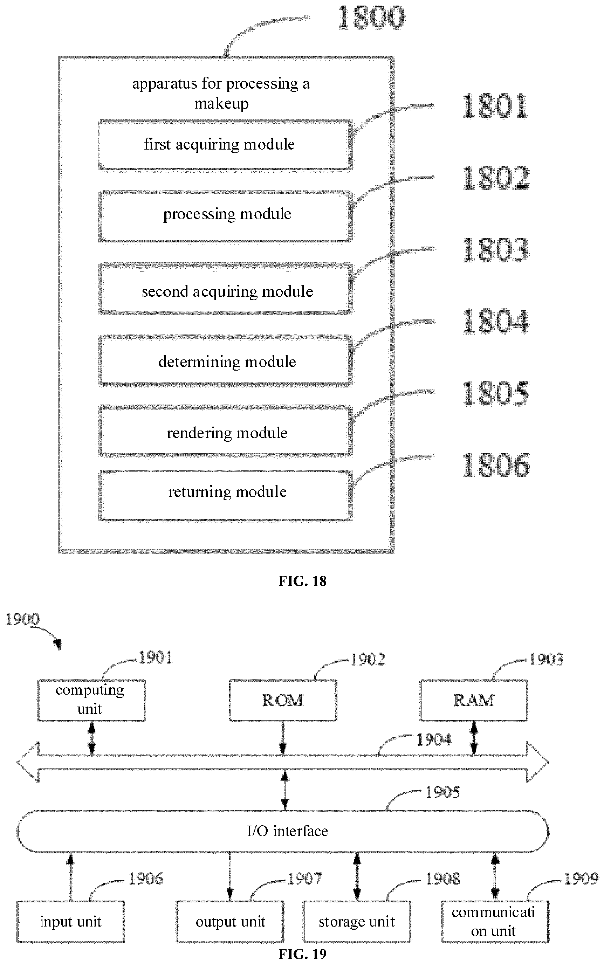

FIG. 18 is a diagram illustrating a structure of an apparatus for makeup processing provided in embodiment 15 of the present disclosure.

As illustrated in FIG. 18, the apparatus 1800 for processing a makeup is applied to a server. The apparatus 1800 for processing a makeup may include a first acquiring module 1801, a processing module 1802, a second acquiring module 1803, a determining module 1804, a rendering module 1805 and a returning module 1806.

The first acquiring module 1801 is configured to acquire a search keyword from the client.

The processing module 1802 is configured to query at least one candidate makeup image matching the search keyword, and send each of the candidate makeup images to the client.

The second acquiring module 1803 is configured to acquire an identifier of a target makeup image in each of the candidate makeup images and a face image of a target object from the client.

The determining module 1804 is configured to determine a target makeup image according to the identifier.

The rendering module 1805 is configured to perform makeup rendering on the face image according to the target makeup image.

The returning module 1806 is configured to return the face image after makeup rendering to the client, where a makeup of the face image after makeup rendering matches a makeup of the target makeup image.

In a possible implementation of embodiments of the present disclosure, the rendering module 1805 is specifically configured to: determine a makeup parameter of the target makeup image; and perform the makeup rendering on the face image according to the makeup parameter.

In a possible implementation of embodiments of the present disclosure, the apparatus 1800 for processing a makeup may further include a search module, and a returning module 1806.

The search module is configured to search a makeup object matching the makeup parameter.

The returning module 1806 is further configured to return object information of the makeup object to the client, where the object information includes an access link of the makeup object.

In a possible implementation of embodiments of the present disclosure, the second acquiring module 1803 is specifically configured to receive a makeup changing instruction sent by the client, where the makeup changing instruction is generated by the client according to the identifier of the target makeup image and the face image of the target object, in response to the selection operation of the target makeup image among each of the candidate makeup images.

In a possible implementation of embodiments of the present disclosure, the first acquiring module 1801 is specifically configured to: receive the search keyword sent by the client, where the search request carries the search keyword. Correspondingly, the processing module 1802 is specifically configured to: search at least one candidate makeup image matching the search keyword in response to the search request; and send a search response to the client, where the search response includes each of the candidate makeup images.

In a possible implementation of embodiments of the present disclosure, the processing module 1802 is specifically configured to: search at least one initial makeup image matching the search keyword in response to the search request; determine a heat of each of the initial makeup images based on a user interaction behavior monitored for each of the initial makeup images; and determine a candidate makeup image from each of the initial makeup images according to the heat of each of the initial makeup images.

In a possible implementation of embodiments of the present disclosure, the processing module 1802 is specifically configured to: search at least one initial makeup image matching the search keyword in response to the search request; acquire a historical search record corresponding to the client; determine preference information corresponding to the client based on the historical search record; and screening each of the initial makeup images according to the preference information so as to obtain each of the candidate makeup images.

In a possible implementation of embodiments of the present disclosure, the apparatus 1800 for processing a makeup may further include a third acquiring module.

The third acquiring module is configured to acquire at least one makeup image to be recommended.

Correspondingly, the search response further includes a makeup image to be recommended, and the makeup changing instruction is generated by the client according to the identifier of the target makeup image and the face image, in response to the selection operation of each of candidate makeup images and the target makeup image in each of the makeup images to be recommended.

In the apparatus for processing a makeup in embodiments of the present disclosure, the server acquires the search keyword from the client; at least one candidate makeup image matching the search keyword is queried and each of the candidate makeup images is sent to the client; the identifier of the target makeup image and the face image of the target object are acquired from the client; the target makeup image is determined according to the identifier and the makeup rendering is performed on the face image based on the target makeup image; and the face image after makeup rendering is returned to the client, where the makeup of the face image after makeup rendering matches the makeup of the target makeup image. Therefore, the makeup rendering may be performed on the face image collected by the client according to the target makeup image selected by the client, so that the face image after makeup rendering satisfies the personalized requirement of the user, thereby improving the user experience.

In order to achieve the above embodiments, a system for processing a makeup is further provided in the present disclosure. The system for processing a makeup includes a client and a server; the client is configured to perform a method for processing a makeup provided in any one embodiment of FIG. 1 to FIG. 8 in the present disclosure; and the server is configured to perform a method for processing a makeup provided in any one embodiment of FIG. 9 to FIG. 16 in the present disclosure.

In order to achieve the above embodiments, an electronic device is further provided. The electronic device may include at least one processor; and a memory communicatively connected to at least one processor; the memory stores instructions executable by at least one processor, and executed by least one processor, so that at least one processor may perform a method for processing a makeup provided in the above any embodiment of the present disclosure.

In order to achieve the above embodiments, a non-transitory computer-readable storage medium stored with computer instructions is further provided. The computer instructions are configured to cause a computer to perform a method of processing a makeup provided in the above any embodiment of the present disclosure.

In order to achieve the above embodiments, a computer program product is further provided. The computer program product includes a computer program. The computer program is configured to achieve a method for processing a makeup provided in the above any embodiment when executed by a processor.

In the embodiment of the present disclosure, an electronic device, a readable storage medium and a computer program product are further provided according to embodiments of the present disclosure

FIG. 19 illustrates a schematic block diagram of an exemplary electronic device configured to implement the embodiment of the present disclosure. The electronic device may include a server or a client in the above embodiment. The electronic device is intended to represent various types of digital computers, such as laptop computers, desktop computers, workstations, personal digital assistants, servers, blade servers, mainframe computers, and other suitable computers. The electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 19, an electronic device 1900 includes a computing unit 1901 configured to execute various appropriate actions and processings based on a computer program stored in a read-only memory (ROM) 1902 or loaded from a storage unit 1908 to a random access memory (RAM) 1903. In the RAM 1903, various programs and data required for an operation of the electronic device 1900 may be stored. The computing unit 1901, the ROM 1902 and the RAM 1903 may be connected with each other via a bus 1904. An input/output (I/O) interface 1905 is also connected to the bus 1904.

More than one component in the electronic device 1900 is connected to the I/O interface 1905, and includes: an input unit 1906, such as a keyboard and a mouse; an output unit 1907, such as various types of displays and speakers; a storage unit 1908, such as a magnetic disk and an optical disk; and a communication unit 1909, such as a network card, a modem and a wireless transceiver. The communication unit 1909 allows the electronic device 1900 to exchange information/data through a computer network such as internet and/or various types of telecommunication networks and other devices.

The computing unit 1901 may be various types of general and/or dedicated processing components with processing and computing capabilities. Some examples of the computing unit 1901 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 1901 executes various methods and processings as described above, for example, the method for processing a makeup. For example, in some embodiments, the method for processing a makeup may be further implemented as a computer software program, which is physically contained in a machine readable medium, such as the storage unit 1908. In some embodiments, a part of or all of the computer program may be loaded and/or installed on the electronic device 1900 via the ROM 1902 and/or the communication unit 1909. When the computer program is loaded to the RAM 1903 and executed by the computing unit 1901, one or more steps in the method for processing a makeup as described above may be performed. Alternatively, in other embodiments, the computing unit 1901 may be configured to perform the method for processing a makeup in other appropriate ways (for example, by virtue of a firmware).

Various implementations of systems and technologies described herein may be implemented in a digital electronic circuit system, an integrated circuit system, a field programmable gate array (FPGA), an application-specific integrated circuit (ASIC), an application specific standard product (ASSP), a system on a chip (SOC), a complex programmable logic device (CPLD), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, at least one input apparatus, and at least one output apparatus.

A computer code configured to execute a method in the present disclosure may be written with one or any combination of multiple programming languages. These programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be executed completely or partly on the machine, executed partly on the machine as an independent software package and executed partly or completely on the remote machine or server.

In the context of the present disclosure, a machine-readable medium may be a tangible medium that may contain or store a program intended for use in or in conjunction with an instruction execution system, apparatus, or device. A machine-readable medium may be a machine readable signal medium or a machine readable storage medium. The machine-readable storage medium may include but not limited to an electronic, magnetic, optical, electromagnetic, infrared, or semiconductor system, apparatus or device, or any appropriate combination thereof. A more specific example of the machine-readable storage medium includes an electronic connector with one or more cables, a portable computer disk, a hardware, a RAM, a ROM, an electrically programmable read-only memory (an EPROM) or a flash memory, an optical fiber device, and a compact disc read-only memory (CD-ROM), an optical storage device, a magnetic storage device, or any appropriate combination thereof.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide inputs to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a speech input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). The examples of a communication network include a Local Area Network (LAN), a Wide Area Network (WAN), an internet and a blockchain network.

The computer system may include a client and a server. The client and server are generally far away from each other and generally interact with each other through a communication network. The relationship between the client and the server is generated by computer programs that run on a corresponding computer and have a client-server relationship with each other. A server may be a cloud server, also known as a cloud computing server or a cloud host, is a host product in a cloud computing service system, to solve the shortcomings of large management difficulty and weak business expansibility existed in the traditional physical host and Virtual Private Server (VPS) service. The server further may be a server with a distributed system, or a server in combination with a blockchain.

It should be noted that, Artificial intelligence(AI) is a subject that learns simulating certain thinking processes and intelligent behaviors (such as learning, reasoning, thinking, planning, etc.) of human beings by a computer, which covers hardware-level technologies and software-level technologies. AI hardware technologies generally include technologies such as sensors, dedicated AI chips, cloud computing, distributed storage, big data processing, etc.; AI software technologies mainly include computer vision technology, speech recognition technology, natural language processing(NLP) technology and machine learning(ML) / deep learning(DL), big data processing technology, knowledge graph(KG) technology, etc.

According to the technical solution in embodiments of the present disclosure, a search keyword is acquired; at least one candidate makeup image matching the search keyword is queried and displayed; a face image after makeup rendering is acquired in response to a selection operation of a target makeup image in each of the candidate makeup images, in which the face image after makeup rendering is acquired by performing a makeup rendering on a collected face image of a target object according to the target makeup image. Thus, a makeup rendering may be performed on a face image collected by a client according to the target makeup image selected by the client, so that the face image after makeup rendering satisfies personalized needs of users, thereby improving the user experience.

It should be understood that, various forms of procedures shown above may be configured to reorder, add or delete blocks. For example, blocks described in the present disclosure may be executed in parallel, sequentially, or in a different order, as long as the desired result of the technical solution disclosed in the present disclosure may be achieved, which will not be limited herein.

The above specific implementations do not constitute a limitation on the protection scope of the present disclosure. Those skilled in the art should understand that various modifications, combinations, sub-combinations and substitutions may be made according to design requirements and other factors. Any modification, equivalent replacement, improvement, etc., made within the principle of embodiments of the present disclosure shall be included within the protection scope of embodiments of the present disclosure.

## Claims

1. A method for processing a makeup, applied to a client, comprising:
acquiring a search keyword;
querying and displaying at least one candidate makeup image matching the search keyword;
acquiring a face image after makeup rendering in response to a selection operation of a target makeup image among each of the candidate makeup images, wherein the face image after makeup rendering is acquired by performing makeup rendering on a collected face image of a target object according to the target makeup image; and
displaying the face image after makeup rendering.

2. The method according to claim 1, wherein querying and displaying at least one candidate makeup image matching the search keyword comprises:
sending a search request to a server, wherein the search request carries the search keyword;
receiving a search response returned by the server, wherein the search response is generated by the server by searching said at least one candidate makeup image matching the search keyword and according to said each of the candidate makeup images, in response to the search request; and
displaying said each of the candidate makeup images.

3. The method according to claim 2, wherein the search response further comprises a search display page matching the search keyword, and displaying said each of the candidate makeup images comprises:
displaying the search display page; and
displaying a function page corresponding to a first setting control in response to a trigger operation of the first setting control on the search display page, wherein the function page displays said each of the candidate makeup images and the face image.

4. The method according to claim 3, further comprising:
receiving object information of a makeup object returned by the server, wherein the object information comprises an access link of the makeup object, and the makeup object is obtained by the server by determining a makeup parameter of the target makeup image and searching according to the makeup parameter.

5. The method according to claim 4, wherein the function page further displays a second setting control for displaying the object information, and the method further comprises:
displaying a makeup object list in response to a trigger operation of the second setting control on the function page, wherein the makeup object list comprises object information of at least one of the makeup object.

6. The method according to any one of claims 1 to 5, wherein acquiring a face image after makeup rendering in response to a selection operation of a target makeup image among each of the candidate makeup images comprises:
sending a makeup changing instruction to the server in response to the selection operation of the target makeup image among each of the candidate makeup images, wherein the makeup changing instruction is generated according to an identifier of the target makeup image and the face image; and
receiving a face image after makeup rendering returned by the server, wherein the face image after makeup rendering matches a makeup of the target makeup image, and the face image after makeup rendering is obtained by the server by determining the target makeup image according to the identifier and performing makeup rendering on the face image based on the target makeup image.

7. A method for processing a makeup, applied to a server, comprising:
acquiring a search keyword from a client;
querying at least one candidate makeup image matching the search keyword, and sending each of the candidate makeup images to the client;
acquiring an identifier of a target makeup image in said each of the candidate makeup images and a face image of a target object from the client;
determining the target makeup image according to the identifier, and performing makeup rendering on the face image according to the target makeup image; and
returning a face image after makeup rendering to the client, wherein a makeup of the face image after makeup rendering matches a makeup of the target makeup image.

8. The method according to claim 7, wherein performing makeup rendering on the face image according to the target makeup image comprises:
determining a makeup parameter of the target makeup image; and
performing the makeup rendering on the face image according to the makeup parameter.

9. The method according to claim 8, wherein after determining the makeup parameter of the target makeup image, the method further comprises:
searching a makeup object matching the makeup parameter; and
returning object information of the makeup object to the client, wherein the object information comprises an access link of the makeup object.

10. The method according to claim 7, wherein acquiring an identifier of a target makeup image in said each of the candidate makeup images and a face image of a target object from the client comprises:
receiving a makeup changing instruction sent by the client, wherein the makeup changing instruction is generated by the client according to the identifier of the target makeup image and the face image of the target object, in response to a selection operation of the target makeup image among each of the candidate makeup images.

11. The method according to claim 10, wherein acquiring a search keyword from the client comprises:
receiving a search request sent by the client, wherein the search request carries the search keyword,
correspondingly, querying at least one candidate makeup image matching the search keyword, and sending each of the candidate makeup images to the client comprises:
searching said at least one candidate makeup image matching the search keyword in response to the search request; and
sending a search response to the client, wherein the search response comprises said each of the candidate makeup images.

12. The method according to claim 11, wherein searching said at least one candidate makeup image matching the search keyword in response to the search request comprises:
searching at least one initial makeup image matching the search keyword in response to the search request;
determining a heat of each of the initial makeup images based on a user interaction behavior monitored for each of the initial makeup images; and
determining a candidate makeup image from said each of the initial makeup images according to the heat of said each of the initial makeup images.

13. The method according to claim 11, wherein searching said at least one candidate makeup image matching the search keyword in response to the search request comprises:
searching at least one initial makeup image matching the search keyword in response to the search request;
acquiring a historical search record corresponding to the client;
determining preference information corresponding to the client based on the historical search record; and
screening said each of the initial makeup images according to the preference information so as to obtain said each of the candidate makeup images.

14. The method according to claim 11, wherein, after searching said at least one candidate makeup image matching the search keyword in response to the search request, the method further comprises:
acquiring at least one makeup image to be recommended,
wherein, correspondingly, the search response further comprises the makeup image to be recommended, and the makeup changing instruction is generated by the client according to the identifier of the target makeup image and the face image, in response to the selection operation of said each of the candidate makeup images and the target makeup image in said each of the makeup images to be recommended.

15. An electronic device, comprising:
at least one processor; and
a memory communicatively connected to said at least one processor, wherein,
the memory is stored with instructions executable by said at least one processor, and when the instructions are performed by said at least one processor, said at least one processor is caused to perform a method of any one of claims 1 to 6 or a method of any one of claims 7 to 14.
